# EUROPEAN PATENT APPLICATION

(11) **EP 4 576 607 A1**
(43) Date of publication of application: **25.06.2025**
(21) Application number: 23218598.3
(22) Date of filing: 20.12.2023
(51) Int. Cl.: H04B 10/118, H04B 10/54, H04B 10/572

(54) **OPTICAL SIGNAL SOURCE AND OPTICAL GROUND TERMINAL OPTICAL TRANSMISSION SYSTEM**

(71) Applicant: NKT Photonics A/S, 3460 Birkerød (DK)
(72) Inventor: YARROW, Michael, Southampton, SO31 4RA (GB); KERDONCUFF, Hugo, 3460 Birkerød (DK); SØRENSEN, Henrik Rokkjær, 3460 Birkerød (DK)
(74) Representative: Zacco Denmark A/S

(57) **Abstract**

An optical signal source (100) comprising:
a seed laser (102) for generating a seed laser signal;
a phase modulator, PM, (104);
radio frequency, RF, drive signal apparatus (106) to provide an RF drive signal to the PM in response to a control signal;
a control apparatus (108) to provide a control signal for causing the RF drive signal apparatus to vary the RF drive signal,
the PM is operative to apply phase modulation to the seed laser signal to form a broadened laser signal having a second spectral linewidth, broader than the first spectral linewidth, of up to 120GHz; and
a band-stop optical filter (110), after the PM, having a stop band configured to reject wavelength corresponding to the first optical spectrum, such that when the control signal is on an output laser signal is formed comprising the second optical spectrum with at least the first optical spectrum substantially removed and when the control signal is off there is substantially no output laser signal.

## Description

### Technical Field

The invention relates to an optical signal source. The invention further relates to an optical ground terminal optical transmission system comprising the optical signal source.

### Background

Free space optical communications offer many advantages over conventional RF communications for space-to-ground and ground-to-space communications, for example to Low Earth Orbiting (LEO) satellites or space missions. For example: there is currently no licencing required for the optical spectrum; it provides point to point secure communications, with a low chance of interference or interception; a narrow optical beam is more efficient - lower power, lower cost, smaller and lighter - than an RF transmitter; optical receivers can also be smaller and lighter compared to RF antennas; they enable higher efficiency longer range communications, including to deep space missions; and optical communications also opens the door to optical quantum key distribution for secure communications.

Free-space optical communications systems for space-to-ground and ground-to-space communications require optical ground terminals (OGT) with optical transmission systems for transmitting beacon signals for pointing, acquisition and tracking (PAT) and data transmission signals for transmitting uplink data. Shaif-ul Alam et al., "Beacon system for ESA IZN-1 Optical Ground Station", IEEE International Conference on Space Optical Systems and Applications (ICSOS), 28-31 March 2022 describes a beacon system for satellite optical communications developed for the European Space Agency (ESA) IZN-1 Optical Ground Station in Tenerife. The system provides a CCSDS standard compatible 1590 nm beacon signal at two selectable beacon modulation frequencies (10 and 100 kHz) to support optical acquisition of two CubeSat missions in low Earth orbits. US 2013/0156439 A1 describes a method for optical data transmission from low earth orbit to earth and a corresponding communication system having a downlink data channel, an uplink data channel and a PAT subsystem including a ground beacon comprising a wide angle beam for acquisition and a guidance beam for tracking, and where the ground beacon for the uplink channel is a pulse position modulated PPM channel.

The physical layer characteristics for free-space optical communications systems for space missions are defined in The Consultative Committee for Space Data Systems draft recommended standard "Optical Communications Physical Layer", for example version CCSDS 141.0-P-1.1. Interoperability specifications for optical communications systems, including space-to-ground free-space optical communications, employed by the US Space Development Agency, SDA, are defined in the SDA "Optical Communications Terminal (OCT) Standard", for example version 3.0.

### Summary

It is an object to provide an improved optical signal source. It is a further object to provide an improved optical ground terminal.

An aspect provides an optical signal source comprising a seed laser, a phase modulator, radio frequency, RF, drive signal apparatus, a control apparatus and a band-stop optical filter. The seed laser is configured to generate a seed laser signal having a first optical spectrum having a first spectral linewidth of up to 10 MHz. The phase modulator is configured to receive the seed laser signal. The RF drive signal apparatus is operative to provide an RF drive signal to the phase modulator in response to a control signal. The control apparatus is configured to provide a control signal to the RF drive signal apparatus. The control signal is configured to cause the RF drive signal apparatus to vary the RF drive signal. The phase modulator is operative in the presence of an RF drive signal to apply phase modulation to the seed laser signal to cause an increase in spectral linewidth thereby forming a broadened laser signal. The broadened laser signal has a second optical spectrum having a second spectral linewidth, which is broader than the first spectral linewidth; the second spectral linewidth is up to 120GHz. The band-stop optical filter is located after the phase modulator. The band-stop optical filter has an optical stop band configured to reject wavelengths corresponding to the first optical spectrum, such that when the control signal is on an output laser signal is formed and when the control signal is off there is substantially no output laser signal. The output laser signal has a third optical spectrum comprising the second optical spectrum with at least the first optical spectrum substantially removed.

This may enable an amplitude modulated broadened output laser signal to be formed. The optical signal source may advantageously benefit from reduced cost and complexity as compared to known optical signal sources utilising a seed laser and spectral broadening, as it requires only one expensive phase modulator and RF driver, which may also reduce losses.

In an embodiment, the band-stop optical filter is a fibre Bragg grating, FBG, having a reflection bandwidth configured to reflect wavelengths corresponding to the first optical spectrum, such that the third optical spectrum comprises the second optical spectrum with the first optical spectrum substantially removed. This may enable effective suppression of the seed laser signal when the RF drive signal apparatus is off, i.e. when pulses are not being generated.

In an embodiment, the band-stop optical filter further comprises a second FBG having a reflection bandwidth configured to reflect wavelengths corresponding to the first optical spectrum, the FBG and the second FBG arranged in series. This may enable further suppression of the seed laser signal when the RF drive signal apparatus is off.

In another embodiment, the band-stop optical filter is a long-period fibre grating, LPG, having wavelength dependent loss at wavelengths corresponding to the first optical spectrum such that the third optical spectrum comprises the second optical spectrum with the first optical spectrum substantially removed. This may enable effective suppression of the seed laser signal when the RF drive signal apparatus is off, i.e. when pulses are not being generated.

In another embodiment, the band-stop optical filter comprises a fibre Bragg grating, FBG, and an optical circulator. The FBG has a reflection bandwidth configured to reflect wavelengths corresponding to one of a long wavelengths side of the second optical spectrum excluding wavelengths corresponding to the first optical spectrum or a short wavelengths side of the second optical spectrum excluding wavelengths corresponding to the first optical spectrum. The optical circulator is arranged to route the broadened laser signal to the FBG and to output light reflected by the FBG. This may enable effective suppression of the seed laser signal when the RF drive signal apparatus is off, i.e. when pulses are not being generated.

In another embodiment, the band-stop optical filter comprises a fibre Bragg grating, FBG, and an optical circulator. The FBG includes a central phase shift such that the FBG is configured to transmit wavelengths corresponding to the first optical spectrum and to reflect the other wavelengths of the second optical spectrum. The optical circulator is arranged to route the broadened laser signal to the FBG and to output light reflected by the FBG. This may enable effective suppression of the seed laser signal when the RF drive signal apparatus is off, i.e. when pulses are not being generated.

In an embodiment, a bandwidth of the optical stop band is less than 20 percent of the second spectral linewidth and the first spectral linewidth is less than 20 percent of the second spectral linewidth. This may enable effective suppression of the seed laser signal when the RF drive signal apparatus is off without significantly reducing the optical power of the output optical pulses. Ensuring that the optical stop band bandwidth and the first spectral linewidth are much narrower than the broadened laser signal may avoid excessive optical loss.

In an embodiment, the seed laser is configured to generate a cw seed laser signal.

In an embodiment, the control signal is configured to cause the RF drive signal apparatus to modulate an RF signal power of the RF drive signal. This may cause a variation in the spectral linewidth of the cw broadened laser signal, resulting in an amplitude modulation of the output laser signal.

In an embodiment, the control signal is additionally configured to cause the RF drive signal apparatus to switch the RF drive signal on and off. This may enable the cw seed laser signal to be formed into a pulsed broadened laser signal, resulting in a pulsed output laser signal. This may enable fast modulation of the seed laser signal to provide output optical pulses at pulse/bit rates of up to Gbps.

In an embodiment, the RF drive signal apparatus comprises an RF signal source, an RF amplifier, and an RF switch. The RF switch is provided between the RF signal source and the RF amplifier. The control signal is configured to cause the RF amplifier to modulate an RF signal power of the RF drive signal. This may cause a variation in the spectral linewidth of the cw broadened laser signal, resulting in an amplitude modulation of the output laser signal.

In another embodiment, the RF drive signal apparatus comprises an RF signal source, an RF amplifier, and an RF switch. The RF switch is provided after the RF amplifier. The control signal is configured to cause the RF amplifier to modulate an RF signal power of the RF drive signal. This may cause a variation in the spectral linewidth of the cw broadened laser signal, resulting in an amplitude modulation of the output laser signal.

In an embodiment, the control signal is additionally configured to cause the RF switch to switch on and off, to switch the RF drive signal on and off. This may enable fast and well controlled switching on and off of the RF drive signal, which may enable the cw seed laser signal to be formed into a pulsed broadened laser signal, resulting in a pulsed output laser signal. It may also enable the output laser signal to be switched on and off.

In an alternative embodiment, the control apparatus is additionally configured to provide a drive signal to the seed laser configured to cause direct modulation of the seed laser to generate a pulsed seed laser signal. The control signal is configured to cause the RF drive signal apparatus to modulate an RF signal power of the RF drive signal. This may cause a variation in the spectral linewidth of the pulsed broadened laser signal, resulting in an amplitude modulation applied onto the pulsed output laser signal.

In an embodiment, the seed laser is a single frequency laser configured to generate a single frequency seed laser signal having a spectral linewidth of up to 10 MHz. Broadening a very narrow linewidth single frequency laser signal using a phase modulator advantageously enables a laser signal to be provided that has an accurately controllable linewidth to mitigate stimulated Brillouin scattering in any following optical amplifiers, with minimal impact on the laser intensity noise.

In an embodiment, the single frequency seed laser signal has a spectral linewidth of up to 1 MHz, such as up to 20 kHz, such as up to 10 kHz, such as up to 1 kHz, such as up to 500 Hz.

Corresponding embodiments and advantages also apply to the optical ground terminal optical transmission system described below.

An aspect provides an optical ground terminal optical transmission system comprising an optical signal source and optical amplifier apparatus. The optical signal source comprises a seed laser, a phase modulator, radio frequency, RF, drive signal apparatus, a control apparatus and a band-stop optical filter. The seed laser is configured to generate a seed laser signal having a seed optical power and having a first optical spectrum having a first spectral linewidth of up to 10 MHz. The phase modulator is configured to receive the seed laser signal. The RF drive signal apparatus is operative to provide an RF drive signal to the phase modulator in response to a control signal. The control apparatus is configured to provide a control signal to the RF drive signal apparatus. The control signal is configured to cause the RF drive signal apparatus to vary the RF drive signal. The control signal comprises at least a beacon modulation signal. The phase modulator is operative in the presence of an RF drive signal to apply phase modulation to the seed laser signal to cause an increase in spectral linewidth thereby forming a broadened laser signal. The broadened laser signal has a second optical spectrum having a second spectral linewidth, which is broader than the first spectral linewidth; the second spectral linewidth is up to 120GHz. The band-stop optical filter is located after the phase modulator. The band-stop optical filter has an optical stop band configured to reject wavelengths corresponding to the first optical spectrum, such that when the control signal is on an output laser signal is formed and when the control signal is off there is substantially no output laser signal. The output laser signal has a third optical spectrum comprising the second optical spectrum with the first optical spectrum removed. The optical amplifier apparatus is configured to amplify the output laser signal to a transmission optical power, higher than the seed optical power.

This may enable the system to generate at least an optical beacon signal. The system may advantageously benefit from reduced cost and complexity as compared to known optical transmission systems for optical ground terminals utilising a seed laser and spectral broadening since the optical signal source requires only one expensive phase modulator and RF driver, which may also reduce losses.

In an embodiment, the control signal is a beacon modulation signal. This advantageously enables the system to generate an optical beacon signal. The system may advantageously benefit from reduced cost and complexity as compared to known optical transmission systems for optical ground terminals, as the optical signal source requires only one expensive phase modulator and RF driver, which may also reduce losses.

In an embodiment, the beacon modulation signal has one of a sinusoidal modulation or an on-off-keying, OOK, modulation. The sinusoidal modulation or the OOK modulation may be a non-return-to-zero, NRZ, modulation.

In an embodiment, the control apparatus is additionally configured to provide a drive signal to the seed laser. The drive signal is configured to cause direct modulation of the seed laser to generate a pulse seed laser signal. The drive signal is an uplink data signal having an uplink data rate.

In an embodiment, the control signal comprises an uplink data signal and a beacon modulation signal. The uplink data signal is configured to cause the RF drive signal apparatus to switch the RF drive signal on and off at an uplink data rate and the beacon modulation signal is configured to modulate the RF signal power of the RF drive signal with a beacon modulation frequency.

This may enable the system to generate a combined optical beacon and data transmission signal.

In an embodiment, beacon modulation frequency is in the range 1 kHz to 100 kHz.

In an embodiment, the uplink data rate is in the range 1 kbps to 10 Gbps. This may enable the system to generate a combined optical beacon and data transmission signal carrying uplink data at bit rates of up to Gbps.

In an embodiment the uplink data signal is an on-off-keying, OOK, modulated signal.

In another embodiment, the uplink data signal is a pulse position modulation, PPM, modulated signal.

In an embodiment, the seed optical power is in the range 1 mW to 200mW. The optical amplifier apparatus comprises a first optical amplifier and at least one further optical amplifier. The first optical amplifier is configured to amplify the output laser signal to an intermediate optical power of up to 20 W. The at least one further optical amplifier is configured to further amplify the output laser signal to an average output optical power of up to 2.5 kW. This may enable the system to transmit data transmission signals to lunar space missions and deep space missions.

In an embodiment, the seed optical power is in the range 1mWto 10mW. The optical amplifier apparatus comprises a first optical amplifier and at least one further optical amplifier. The first optical amplifier is configured to amplify the output laser signal to an intermediate optical power of up to 1 W. The at least one further optical amplifier is configured to further amplify the output laser signal to an average output optical power of up to 20 W. This may enable the system to transmit data transmission signals to LEO satellites and medium Earth orbit, MEO, satellites.

In an embodiment, the system further comprises a delivery optical fibre and output optics at a distal end of the delivery optical fibre. The delivery optical fibre is one of a large mode-area microstructured optical fibre or a hollow core microstructured optical fibre. The delivery optical fibre is configured to deliver the output laser signal to the output optics. This may enable the laser system to be installed remote from the beam launch system of an optical ground station.

Embodiments of the invention will now be described, by way of example only, with reference to the accompanying drawings.

### Brief Description of the drawings

Figures 1A, 2A, 2B, 3A, 4A and 5 to 9 are block diagrams illustrating embodiments of optical signal sources;
Figure 2C illustrates the optical output of the optical signal source of Figures 2A and 2B and 4 to 7;
Figure 3B illustrates the optical output of the optical signal source of Figure 3A;
Figure 4B shows reflectivity I as a function of wavelength of an FBG having a pi phase shift, for use in the optical signal source of Figure 4A;
Figure 4C illustrates the optical output of the optical signal source of Figure 4A; and
Figures 10 to 13 are block diagrams illustrating embodiments of an optical ground terminal optical transmission system.

### Detailed description

The same reference numbers are used for corresponding features in different embodiments.

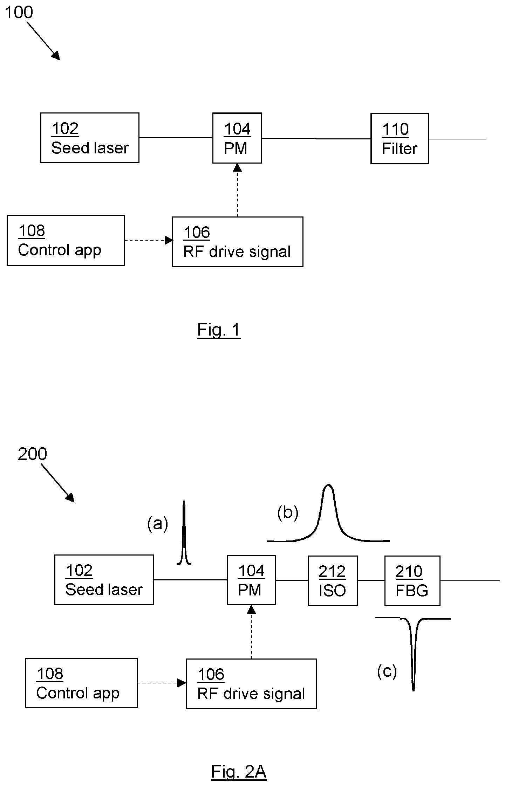

Referring to Figure 1, an embodiment provides an optical signal source 100 comprising a seed laser 102, a phase modulator 104, radio frequency, RF, drive signal apparatus 106, a control apparatus 108 and a band-stop optical filter 110.

The seed laser is configured to generate a cw seed laser signal having a first optical spectrum having a first spectral linewidth of up to 10 MHz.

The phase modulator is configured to receive the cw seed laser signal.

The control apparatus is configured to generate a control signal and to provide the control signal to the RF drive signal apparatus. The RF drive signal apparatus is operative to provide an RF drive signal to the phase modulator in response to the control signal. The control signal is configured to cause the RF drive signal apparatus to modulate an RF signal power of the RF drive signal.

The phase modulator is operative in the presence of the RF drive signal to apply phase modulation to the cw seed laser signal. The phase modulation causes an increase in the spectral linewidth of the cw seed laser signal thereby forming a broadened cw laser signal. The broadened cw laser signal has a second optical spectrum, which has a second spectral linewidth, broader than the first spectral linewidth. The second spectral linewidth is up to 120GHz.

The amount of broadening is dependent on the RF signal power of the RF drive signal. By modulating the RF signal power the amount of broadening varies, i.e. the second spectral linewidth is varied.

The band-stop optical filter 110 is located after the phase modulator. The band-stop optical filter has an optical stop band configured to reject wavelengths corresponding to the first optical spectrum. This means that, when the control signal is off there is substantially no output laser signal. This is because the cw seed laser signal passes through the phase modulator without being broadened, and the band-stop optical filter stops onward transmission of substantially all of the cw seed laser signal. It will be understood that it is generally not possible to manufacture a band-stop optical filter which rejects 100% of the light within its optical stop band, therefore stopping transmission of substantially all of the light within its stop band will be understood to mean the maximum amount of light that can be rejected within the manufacturing tolerances of the band-stop optical filter.

When the control signal is on, an output laser signal is formed. This is because the phase modulator applies a phase modulation to the cw seed laser signal which causes an increase in its spectral linewidth, thereby forming a broadened cw laser signal. The band-stop optical filter still stops onward transmission of substantially all of the light at the cw seed laser wavelengths, but it does not affect light at the other wavelengths within the broadened cw laser signal. The output laser signal therefore has a third optical spectrum comprising the second optical spectrum with at least the first optical spectrum substantially removed.

Since the amount of broadening, i.e. the second spectral linewidth, varies with the RF signal power, the fraction of the second optical spectrum that is removed by the band-stop optical filter also varies, resulting in an amplitude modulation, i.e. variation of the optical power, of the broadened output laser signal.

In an alternative embodiment, the control apparatus is configured to receive a control signal from an external source and to provide the control signal to the RF drive signal apparatus 106.

In an embodiment, a bandwidth of the optical stop band of the band-stop optical filter is less than 20 percent of the second spectral linewidth, i.e. less than 20 percent of the linewidth of the broadened cw laser signal. The first spectral linewidth is also less than 20 percent of the second spectral linewidth, i.e. the linewidth of the cw seed laser signal is less than 20 percent of the broadened cw laser signal. To ensure that the optical stop band rejects the maximum possible amount of light at wavelengths corresponding of the cw seed laser signal, the bandwidth of the optical stop band should be at least equal to the linewidth of the cw seed laser signal.

In an embodiment, the control signal is additionally configured to cause the RF drive signal apparatus to switch the RF drive signal on and off. A pulsed broadened output signal, with an overlaid amplitude modulation, can therefore be formed.

In an embodiment, the seed laser 102 is a single frequency laser configured to generate a single frequency cw seed laser signal having a spectral linewidth of up to 10 MHz. The seed laser 102 may, for example, be a distributed-feedback, DFB, diode laser or a distributed Bragg reflector, DBR, diode laser.

In an embodiment, the seed laser 102 is a single frequency laser configured to generate a single frequency cw seed laser signal having a spectral linewidth of up to 1 MHz. The seed laser 102 may, for example, be an external cavity diode laser, ECDL.

In an embodiment, the single frequency cw seed laser signal has a spectral linewidth of up to 10 kHz. The seed laser 102 may, for example, be a NKT Photonics ^{®} Koheras BASIK Y10 Ytterbium fibre laser having a wavelength of 1064 nm, at least 10 mW output power and a spectral linewidth (full width half maximum, FWHM) of 10 kHz.

In an embodiment, the single frequency cw seed laser signal has a spectral linewidth of up to 1 kHz.

In an embodiment, the single frequency cw seed laser signal has a spectral linewidth of up to 500 Hz. The seed laser 102 may, for example, be a NKT Photonics ^{®} Koheras BASIK E15 Erbium fibre laser having a wavelength of 1550.12 nm, 40 mW output power and a spectral linewidth (full width half maximum, FWHM) of 200 Hz.

An embodiment provides an optical signal source 200, illustrated in Figure 2A, comprising a seed laser 102, a phase modulator 104, radio frequency, RF, drive signal apparatus 106, a control apparatus 108, as described above, and a band-stop optical filter 210.

The seed laser is configured to generate a cw seed laser signal having a first optical spectrum (spectrum (a) in Figure 2A). The broadened laser signal, which may be cw or pulsed as described above, has a second optical spectrum (spectrum (b) in Figure 2A).

In this embodiment, the band-stop optical filter is a fibre Bragg grating, FBG, 210. The optical stop band of the FBG is the reflection bandwidth of the FBG (spectrum I in Figure 2A). The FBG 210 is configured to reflect wavelengths corresponding to the first optical spectrum, i.e. it reflects wavelengths corresponding to the cw seed laser signal. The optical signal source 200 therefore additionally comprises an optical isolator, ISO, 212 between the phase modulator 104 and the FBG, to prevent the reflected light being transmitted back to the seed laser 102.

When the control signal is off there is substantially no output laser signal. This is because the cw seed laser signal passes through the phase modulator without being broadened, and the FBG 210 reflects substantially all of the cw seed laser signal. It will be understood that it is generally not possible to fabricate an FBG which reflects 100% of the light within its reflection bandwidth, however 99% reflectivity is achievable for a uniform FBG.

When the control signal is on, an output laser signal is formed. This is because the phase modulator applies a phase modulation to the cw seed laser signal which causes an increase in its spectral linewidth, thereby forming a broadened laser signal. The FBG still reflects substantially all of the light at the seed laser wavelengths, but it does not affect light at the other wavelengths within the broadened laser signal. A cw or pulsed broadened output laser signal is therefore formed with a third optical spectrum comprising the second optical spectrum with the first optical spectrum substantially removed.

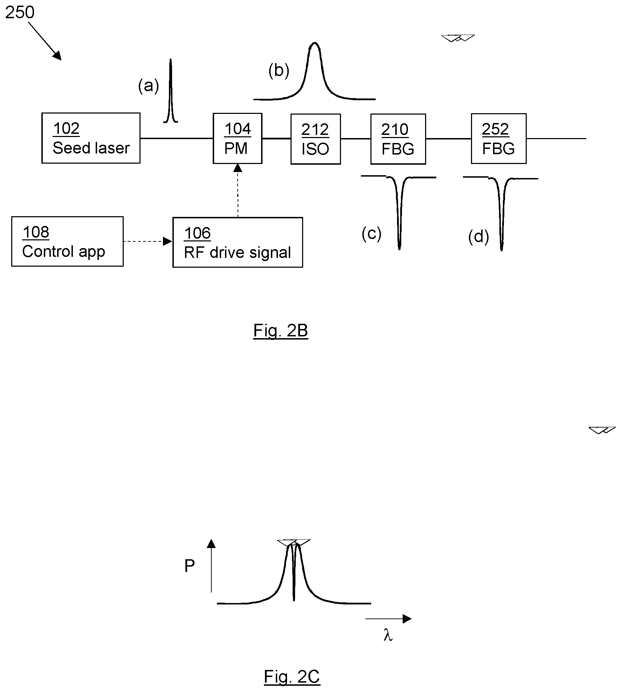

The amount of broadening is dependent on the RF signal power of the RF drive signal. By modulating the RF signal power the amount of broadening varies, i.e. the second spectral linewidth is varied. Figure 2C illustrates the third optical spectrum for one RF signal power; it will be appreciated that for a lower RF signal power the third optical spectrum will have a narrower linewidth, and for a higher RF signal power it will have a broader linewidth.

In an embodiment, the reflection bandwidth of the FBG 210 is less than 20 percent of the second spectral linewidth, i.e. less than 20 percent of the linewidth of the broadened laser signal. The first spectral linewidth is also less than 20 percent of the second spectral linewidth.

In an embodiment, illustrated in Figure 2B, the optical signal source 250 band-stop optical filter additionally comprises a second FBG 252. The second FBG has a reflection bandwidth configured to reflect wavelengths corresponding to the first optical spectrum. It may have substantially the same reflection bandwidth as the FBG 210, and a reflectivity of up to 99%, as discussed above. The FBG and the second FBG are arranged in series, and between them stop transmission of close to 100% of the light within their reflection bandwidth.

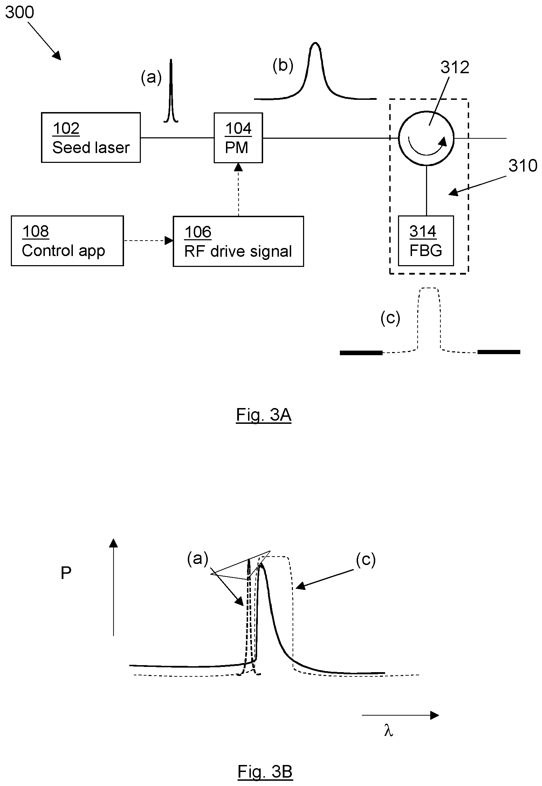

An embodiment provides an optical signal source 300, illustrated in Figures 3A and 3B, comprising a seed laser 102, a phase modulator 104, radio frequency, RF, drive signal apparatus 106, a control apparatus 108, as described above, and a band-stop optical filter 310.

The band-stop optical filter comprises an optical circulator 312 and an FBG 314. The optical circulator is arranged to receive the broadened laser signal (note that this may be cw or pulsed, as described above) at a first port, route the broadened laser signal to the FBG which is connected to the second port of the optical circulator, and route light reflected by the FBG to a third port, where it is output.

The FBG 314 has a spectral reflection profile as illustrated in insert I of Figure 3A. The FBG has a reflection bandwidth configured to reflect wavelengths corresponding to a long wavelengths side of the second optical spectrum excluding wavelengths corresponding to the first optical spectrum, as can be seen in Figure 3B.

As noted above, the amount of broadening is dependent on the RF signal power of the RF drive signal. By modulating the RF signal power the amount of broadening varies, i.e. the second spectral linewidth is varied. Figure 3B illustrates the third optical spectrum for one RF signal power; it will be appreciated that for a lower RF signal power the third optical spectrum will have a narrower linewidth, and for a higher RF signal power it will have a broader linewidth.

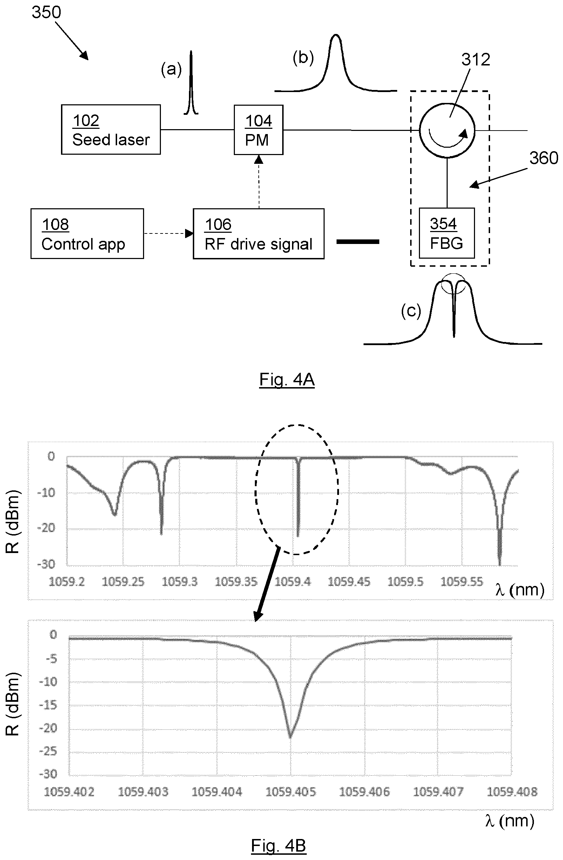

In an alternative embodiment, FBG has a reflection bandwidth configured to reflect wavelengths corresponding to a short wavelengths side of the second optical spectrum excluding wavelengths corresponding to the first optical spectrum. An embodiment provides an optical signal source 350, illustrated in Figures 4A and 4B, comprising a seed laser 102, a phase modulator 104, radio frequency, RF, drive signal apparatus 106, a control apparatus 108, as described above, and a band-stop optical filter 360.

The band-stop optical filter comprises an optical circulator 312 and an FBG 354. The optical circulator is arranged to receive the broadened laser signal (note that this may be cw or pulsed, as described above) at a first port, route the broadened laser signal to the FBG which is connected to the second port of the optical circulator, and route light reflected by the FBG to a third port, where it is output.

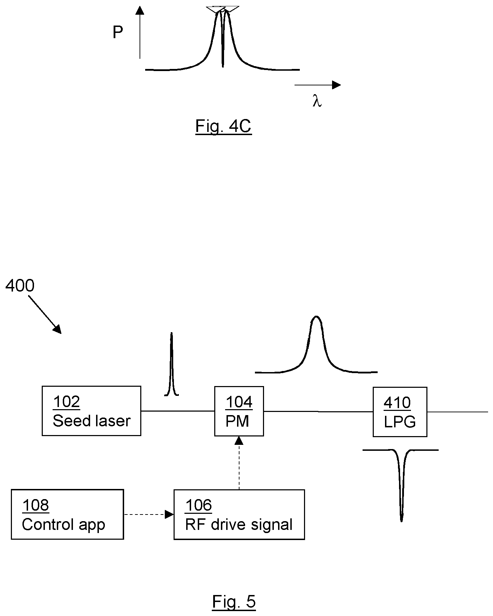

The FBG 354 has a central phase shift giving it a spectral reflection profile including a transmission notch, as illustrated schematically in insert I of Figure 4A. The FBG 354 may, for example, have a pi phase shift, giving it a very narrow central transmission notch, as shown in the grating reflectivity profiles in Figure 4B. The FBG is configured to transmit wavelengths corresponding to the first optical spectrum, i.e. the spectrum of the seed laser 102, and to reflect all other wavelengths within its bandwidth, i.e. the rest of wavelengths of the second optical spectrum. The (cw or pulsed) output laser signal therefore has a third optical spectrum comprising the second optical spectrum with the first optical spectrum substantially removed, as illustrated in Figure 4C.

As noted above, the amount of broadening is dependent on the RF signal power of the RF drive signal. By modulating the RF signal power the amount of broadening varies, i.e. the second spectral linewidth is varied. Figure 3B illustrates the third optical spectrum for one RF signal power; it will be appreciated that for a lower RF signal power the third optical spectrum will have a narrower linewidth, and for a higher RF signal power it will have a broader linewidth.

Another embodiment provides an optical signal source 400, illustrated in Figure 5, comprising a seed laser 102, a phase modulator 104, radio frequency, RF, drive signal apparatus 106, a control apparatus 108, as described above, and a band-stop optical filter 410.

In this embodiment, the band-stop optical filter is a long-period fibre grating, LPG, 410. The optical stop band of an LPG is the bandwidth over which the LPG suffers wavelength dependent loss, i.e. the wavelengths that are coupled into cladding modes of the optical fibre by the LPG. The LPG 410 is configured to have wavelength dependent loss at wavelengths corresponding to the first optical spectrum, i.e. wavelengths corresponding to the seed laser signal are coupled into the fibre cladding modes.

In an embodiment, the bandwidth over which the LPG 410 suffers wavelength dependent loss is less than 20 percent of the second spectral linewidth, i.e. less than 20 percent of the linewidth of the broadened laser signal. The first spectral linewidth is also less than 20 percent of the second spectral linewidth.

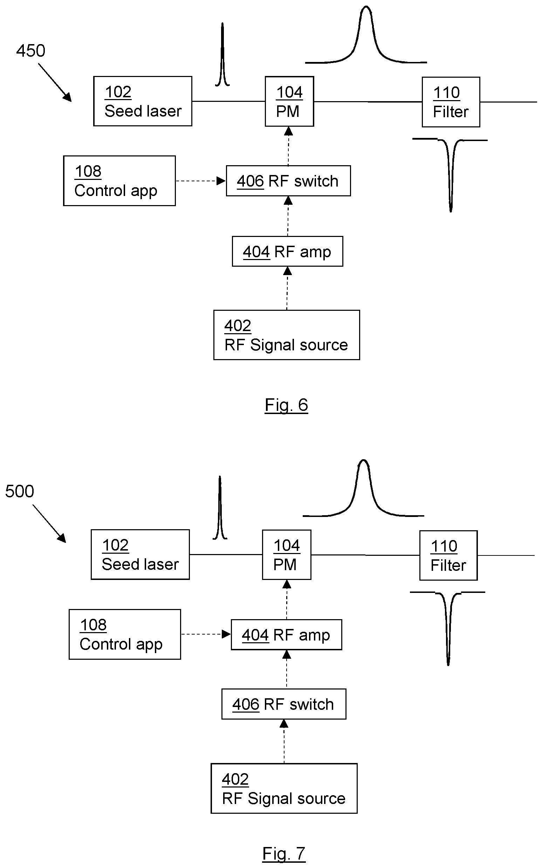

An embodiment provides an optical signal source 450, illustrated in Figure 6, comprising a seed laser 102, a phase modulator 104, a control apparatus 108 and a band-stop optical filter 110, as described above, and RF drive signal apparatus.

The RF drive signal apparatus comprises an RF signal source 402, an RF amplifier 404, and an RF switch 406. The RF switch is provided after the RF amplifier and before the phase modulator 104. The control signal is configured to cause the RF switch to switch on and off, to switch the RF drive signal on and off.

It will be appreciated that the optical band-pass filter 110 may alternatively be an FBG 210 or an LPG 410, as described above, and that the RF drive signal apparatus of this embodiment may also be used with the optical signal sources 200, 250, 300, 350, 400 described above.

The RF signal source 402 may be an RF sinusoidal source, an RF noise source, a superposition of multiple sinusoidal frequencies or a pseudo-random binary sequence, PRBS.

An embodiment provides an optical signal source 500, illustrated in Figure 7, comprising a seed laser 102, a phase modulator 104, a control apparatus 108 and a band-stop optical filter 110, as described above, and RF drive signal apparatus.

The RF drive signal apparatus comprises an RF signal source 402, an RF amplifier 404, and an RF switch 406. The RF switch is provided between the RF signal source and the RF amplifier. The control signal is configured to cause the RF switch to switch on and off, to switch the RF drive signal on and off.

It will be appreciated that the optical band-pass filter 110 may alternatively be an FBG 210 or an LPG 410, as described above, and that the RF drive signal apparatus of this embodiment may also be used with the optical signal sources 200, 250, 300,350, 400 described above.

The RF signal source 402 may be an RF sinusoidal source, an RF noise source, a superposition of multiple sinusoidal frequencies or a pseudo-random binary sequence, PRBS.

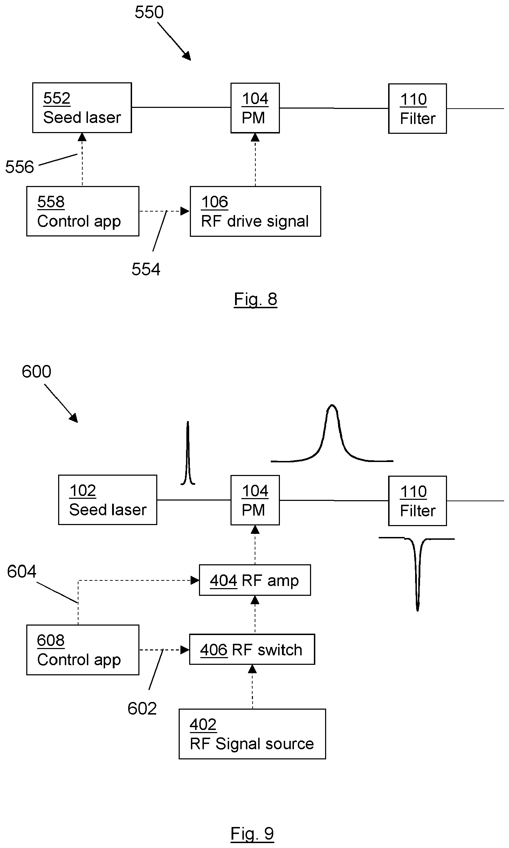

An embodiment provides an optical signal source 550, illustrated in Figure 8, comprising a seed laser 552, a phase modulator 104, RF drive signal apparatus 106 and a band-stop optical filter 110, as described above, and a control apparatus 558.

The seed laser 552 is a directly modulated laser, such as a DFB diode laser, such as an AeroDIODE^{™} 1064LD-2a, configured to generate a pulsed seed laser signal in response to receiving a drive signal 556.

The control apparatus 558 is configured to provide a control signal 554 to the RF drive signal apparatus 106. The control signal is configured to cause the RF drive signal apparatus to modulate an RF signal power of the RF drive signal. The control signal 554 is a beacon modulation signal.

The control apparatus 558 is additionally configured to provide the drive signal 556 to the seed laser 552. The drive signal is configured to cause direct modulation of the seed laser, to generate the pulsed seed laser signal. The drive signal 556 is an uplink data signal.

The band-stop optical filter may be an FBG 210 as shown in Figure 2A, a series of two FBGs 210, 252 as shown in Figure 2B, an optical circulator 312 and an FBG 314 as shown in Figure 3A, an optical circulator 312 and an FBG 354 as shown in Figure 4A, or an LPG as shown in Figure 5.

When the control signal is off there is substantially no output laser signal. This is because the pulsed seed laser signal passes through the phase modulator without being broadened, and the FBG 210 reflects substantially all of the pulsed seed laser signal. It will be understood that it is generally not possible to fabricate an FBG which reflects 100% of the light within its reflection bandwidth, however 99% reflectivity is achievable for a uniform FBG.

When the control signal is on, an output laser signal is formed. This is because the phase modulator applies a phase modulation to the pulsed seed laser signal which causes an increase in its spectral linewidth, thereby forming a broadened pulsed laser signal. The FBG still reflects substantially all of the light at the pulsed seed laser wavelengths, but it does not affect light at the other wavelengths within the broadened pulsed laser signal. The output laser signal therefore has a third optical spectrum comprising the second optical spectrum with the first optical spectrum substantially removed, as illustrated in Figure 2C.

The amount of broadening is dependent on the RF signal power of the RF drive signal. By modulating the RF signal power the amount of broadening varies, i.e. the second spectral linewidth is varied. Figure 2C illustrates the third optical spectrum for one RF signal power; it will be appreciated that for a lower RF signal power the third optical spectrum will have a narrower linewidth, and for a higher RF signal power it will have a broader linewidth.

An embodiment provides an optical signal source 600, illustrated in Figure 9, comprising a seed laser 102, a phase modulator 104, RF drive signal apparatus and a band-stop optical filter 110, as described above, and a control apparatus 608.

The control apparatus 608 is configured to generate control signals for the RF drive signal apparatus. The control apparatus is configured to generate a first control signal 602 configured to cause the RF switch 406 to switch on and off, to switch the RF drive signal on and off. The control apparatus is additionally configured to generate a second control signal 604 configured to cause the RF amplifier 404 to modulate an RF signal power of the RF drive signal. The first control signal may be a digital control signal and the second control signal may be an analogue control signal.

It will be appreciated that the optical band-pass filter 110 may alternatively be an FBG 210 or an LPG 410, as described above, and that the RF drive signal apparatus may alternatively have the RF amplifier provided between the RF signal source 402 and the RF switch, as described above. It will be appreciated that the RF drive signal apparatus of this embodiment may also be used with the optical signal sources 200, 250, 300, 350, 400 described above.

The RF signal source 402 may be an RF sinusoidal source, an RF noise source, a superposition of multiple sinusoidal frequencies or a pseudo-random binary sequence, PRBS.

By switching the RF switch on and off, the cw seed laser signal is formed into a pulsed broadened laser signal. Since the amount of broadening, i.e. the second spectral linewidth, varies with the RF signal power, the fraction of the second optical spectrum that is removed by the band-stop optical filter also varies, resulting in an amplitude modulation, i.e. variation of the optical power of the pulsed output laser signal.

In an alternative embodiment, the control apparatus 608 is configured to receive a control signal from an external source and to provide the control signal to the RF drive signal apparatus 106.

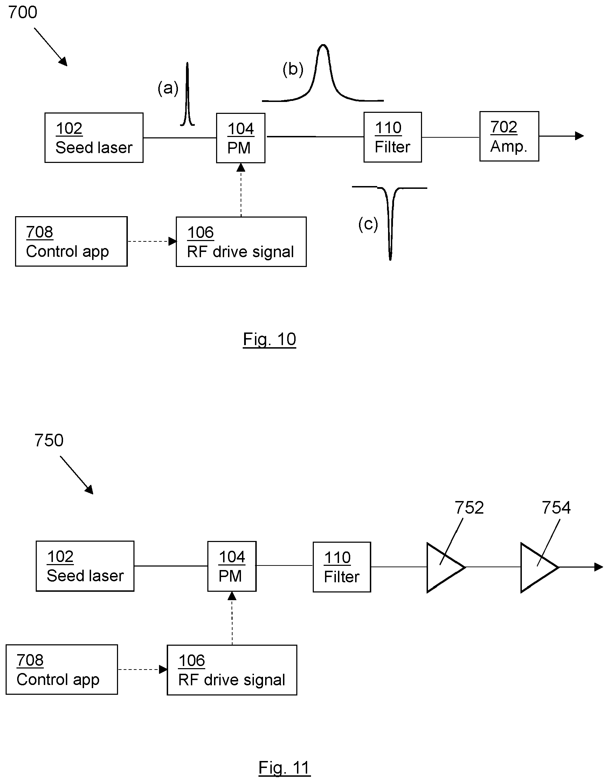

Referring to Figure 10, an embodiment provides an optical ground terminal optical transmission system 700 comprising an optical signal source 100 and optical amplifier apparatus 702, for generating an optical beacon signal.

The optical signal source 100 is generally as described above with reference to Figure 1. It will be appreciated that an optical signal source 200, 250, 300, 350, 400, 450, 500, 550, 600 as described above with reference to any one of Figures 2A to 8 may alternatively be used.

The control apparatus 708 is configured to generate a control signal in the form of a beacon modulation signal, and to provide the beacon modulation signal to the RF drive signal apparatus 106. The beacon modulation signal is configured to cause the RF drive signal apparatus to modulate an RF signal power of the RF drive signal at a beacon modulation frequency. The seed laser 102 is configured to generate a cw seed laser signal having a seed optical power. The optical amplifier apparatus 702 is configured to receive the output laser signal from the optical signal source and to amplify the laser signal to a transmission optical power, higher than the seed optical power, to form the optical beacon signal for transmission.

In an embodiment, the beacon modulation frequency is in the range 1 kHz to 100 kHz.

In an alternative embodiment, the control apparatus is configured to receive a beacon modulation signal from an external source and to provide the beacon modulation signal to the RF drive signal apparatus 106.

An embodiment provides an optical ground terminal optical transmission system 750, as illustrated in Figure 11, comprising an optical signal source 100 and optical amplifier apparatus, for generating an optical beacon signal, similar to the system 600 described above with reference to Figure 10.

In this embodiment, the seed laser 102 is configured to generate a cw seed laser signal having a seed optical power in the range 1 to 200mW and having a first optical spectrum. The first optical spectrum has a first spectral linewidth of up to 10MHz.

The optical amplifier apparatus comprises a first optical amplifier 752 and a second optical amplifier 754, connected in series. The first optical amplifier and the second optical amplifier may be high power Ytterbium, Yb, doped fibre amplifiers. The first optical amplifier 752 is configured to amplify the output laser signal from the optical signal source to an intermediate optical power of up to 10 W. The second optical amplifier 754 is configured to further amplify the output laser signal to a transmission optical power of up to 2.5 kW, to form an optical beacon signal for transmission to lunar or deep space missions.

In another embodiment, the first optical amplifier 752 and the second optical amplifier 754 are C-band (1530 nm to 1565 nm) or L-band (1565 nm to 1625 nm) fibre amplifiers. The first optical amplifier 752 is configured to amplify the output laser signal from the optical signal source to an intermediate optical power of up to 1 W. The second optical amplifier 754 is configured to further amplify the output laser signal to a transmission optical power in the range 5 W to 10 W, to form an optical beacon signal for transmission to low Earth orbit, LEO, satellites, or up to 20 W, to form an optical beacon signal for transmission to medium Earth orbit, MEO, satellites.

In a further embodiment, the optical amplifier apparatus a first optical amplifier 752, a second optical amplifier 754 and a third optical amplifier, connected in series. The second optical amplifier and the third optical amplifier are configured to together amplify the output laser signal to a transmission optical power of up to 2.5 kW, to form the optical beacon signal for transmission. This may be particularly advantageous when the seed laser 102 has an operating wavelength far from the gain peaks of the optical amplifiers.

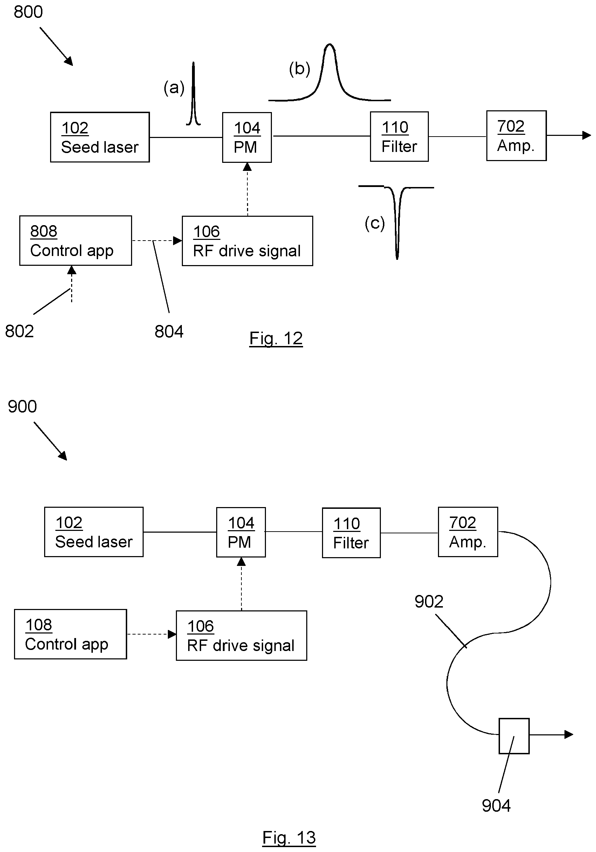

An embodiment provides an optical ground terminal optical transmission system 800, as illustrated in Figure 12, comprising an optical signal source 100 and optical amplifier apparatus 702, for generating an optical combined beacon and data signal.

The optical signal source 800 is generally as described above with reference to Figure 1. It will be appreciated that an optical signal source 600 as described above with reference to Figure 9 may alternatively be used.

The control apparatus 808 is configured to generate a control signal in the form of a combined beacon and data signal. The control apparatus 808 is configured to receive an uplink data signal 802, having an uplink data rate, from an external source and to combine the uplink data signal with a beacon modulation signal, having a beacon modulation frequency, to form the combined beacon and data signal 804.

The combined beacon and data signal is configured to cause the RF drive signal apparatus 106 to switch the RF drive signal on and off at the uplink data rate and to modulate the RF signal power of the RF drive signal at the beacon modulation frequency.

By switching the RF switch on and off, the cw seed laser signal is formed into a pulsed broadened laser signal. Since the amount of broadening, i.e. the second spectral linewidth, varies with the RF signal power, the fraction of the second optical spectrum that is removed by the band-stop optical filter also varies, resulting in an amplitude modulation, i.e. variation of the optical power of the pulsed output laser signal. A combined optical beacon and data signal for transmission is thereby formed.

In an embodiment, the beacon modulation frequency is in the range 1 kHz to 100 kHz.

In an embodiment, the uplink data signal is an on-off-keying, OOK, modulated signal. The uplink data rate is in the range 1 kbps to 10 Gbps.

In another embodiment, the uplink data signal is a pulse position modulation, PPM, modulated signal. The uplink data rate is in the range 1 kbps to 10 Gbps.

In an alternative embodiment, the control apparatus is configured to receive a combined beacon and data signal from an external source and to provide the combined beacon and data signal to the RF drive signal apparatus 106.

An embodiment provides an optical ground terminal optical transmission system 900, as illustrated in Figure 13, comprising an optical signal source 100 and optical amplifier apparatus 702, as described above. It will be appreciated that an optical signal source 200, 250, 300, 350, 400, 450, 500, 550, 600 as described above with reference to any one of Figures 2A to 8 may alternatively be used.

The system 900 further comprises a delivery optical fibre 902 and output optics 904 provided at a distal end of the delivery optical fibre. The delivery optical fibre is configured to deliver the output laser signal to the output optics. The delivery optical fibre may be a large mode-area microstructured optical fibre or may be a hollow core microstructured optical fibre.

The following provides a list of embodiments of the present disclosure.
1. An optical signal source (100, 200, 250, 300, 350, 400, 450, 500, 550, 600) comprising:
   a seed laser (102) configured to generate a seed laser signal having a first optical spectrum having a first spectral linewidth of up to 10 MHz;
   a phase modulator (104) configured to receive the seed laser signal;
   radio frequency, RF, drive signal apparatus (106, 402, 404, 406) operative to provide an RF drive signal to the phase modulator in response to a control signal;
   a control apparatus (108, 558, 608, 708) configured to provide a control signal to the RF drive signal apparatus, the control signal configured to cause the RF drive signal apparatus to vary the RF drive signal,
   wherein the phase modulator is operative in the presence of an RF drive signal to apply phase modulation to the seed laser signal to cause an increase in spectral linewidth thereby forming a broadened laser signal having a second optical spectrum having a second spectral linewidth, broader than the first spectral linewidth, wherein the second spectral linewidth is up to 120GHz; and
   a band-stop optical filter (110, 210, 310, 360, 410) located after the phase modulator, the band-stop optical filter having an optical stop band configured to reject wavelengths corresponding to the first optical spectrum, such that when the control signal is on an output laser signal is formed having a third optical spectrum comprising the second optical spectrum with at least the first optical spectrum substantially removed and when the control signal is off there is substantially no output laser signal.
2. The optical signal source of item 1, wherein the band-stop optical filter comprises one of a fibre Bragg grating, FBG, (210, 252) having a reflection bandwidth configured to reflect wavelengths corresponding to the first optical spectrum or a long-period fibre grating, LPG, (410) having wavelength dependent loss at wavelengths corresponding to the first optical spectrum, such that the third optical spectrum comprises the second optical spectrum with the first optical spectrum substantially removed.
3. The optical signal source of item 1, wherein the band-stop optical filter comprises:
   an FBG (314) having a reflection bandwidth configured to reflect wavelengths corresponding to one of a long wavelengths side of the second optical spectrum excluding wavelengths corresponding to the first optical spectrum or a short wavelengths side of the second optical spectrum excluding wavelengths corresponding to the first optical spectrum; and
   an optical circulator (312), arranged to route the broadened laser signal to the FBG and to output light reflected by the FBG.
4. The optical signal source of item 1, wherein the band-stop optical filter comprises:
   an FBG (354) including a central phase shift such that the FBG is configured to transmit wavelengths corresponding to the first optical spectrum and to reflect the other wavelengths of the second optical spectrum; and
   an optical circulator (312), arranged to route the broadened laser signal to the FBG and to output light reflected by the FBG.
5. The optical signal source of any one of the preceding items, wherein a bandwidth of the optical stop band and the first spectral linewidth are less than 20 percent of the second spectral linewidth.
6. The optical signal source of any one of the preceding items, wherein the seed laser is configured to generate a cw seed laser signal.
7. The optical signal source of item 6, wherein the control signal is configured to cause the RF drive signal apparatus to modulate an RF signal power of the RF drive signal.
8. The optical signal source of item 7, wherein the control signal is additionally configured to cause the RF drive signal apparatus to switch the RF drive signal on and off.
9. The optical signal source of item 6, wherein the RF drive signal apparatus comprises an RF signal source (402), an RF amplifier (404), and an RF switch (406), wherein the RF switch is provided between the RF signal source and the RF amplifier or the RF switch is provided after the RF amplifier, and wherein the control signal is configured to cause the RF amplifier to modulate an RF signal power of the RF drive signal.
10. The optical signal source of item 9, wherein the control signal is additionally configured to cause the RF switch to switch on and off, to switch the RF drive signal on and off.
11. The optical signal source of any one of items 1 to 5, wherein the control apparatus is additionally configured to provide a drive signal to the seed laser configured to cause direct modulation of the seed laser to generate a pulsed seed laser signal, and the control signal is configured to cause the RF drive signal apparatus to modulate an RF signal power of the RF drive signal.
12. The optical signal source of any one of the preceding items, wherein the seed laser (102) is a single frequency laser configured to generate a single frequency seed laser signal having a spectral linewidth of up to 10 MHz.
13. The optical signal source of item 12, wherein the single frequency seed laser signal has a spectral linewidth of up to 1 MHz, such as up to 20 kHz, such as up to 10 kHz, such as up to 1 kHz, such as up to 500 Hz.
14. An optical ground terminal optical transmission system (700, 750, 800, 900) comprising:
   an optical signal source (100, 200, 300, 400, 500, 550, 600, 650) as itemed in any one of items 1 to 13; and
   optical amplifier apparatus (702, 752, 754),
   wherein the control signal comprises at least a beacon modulation signal; and
   wherein the seed laser signal has a seed optical power and wherein the optical amplifier apparatus is configured to amplify the output laser signal to a transmission optical power, higher than the seed optical power.
15. The system of item 14, wherein the control signal is a beacon modulation signal.
16. The system of item 15, wherein the beacon modulation signal has one of a sinusoidal modulation, a non-return-to-zero, NRZ, modulation or an on-off-keying, OOK, modulation.
17. The system of any one of item 15 or item 16, wherein the drive signal to the seed laser is an uplink data signal having an uplink data rate.
18. The system of item 14, wherein the control signal comprises an uplink data signal and a beacon modulation signal, wherein the uplink data signal is configured to cause the RF drive signal apparatus (106, 402, 404, 406) to switch the RF drive signal on and off at an uplink data rate and the beacon modulation signal is configured to modulate the RF signal power of the RF drive signal at a beacon modulation frequency.
19. The system of any one of items 14 to 18, wherein the beacon modulation frequency is in the range 1 kHz to 100 kHz.
20. The system of any one of item 17 or item 18, wherein the uplink data rate is in the range 1 kbps to 10 Gbps.
21. The system of any one of item 17, item 18 or item 20, wherein the uplink data signal is one of an on-off-keying, OOK, modulated signal or a pulse position modulation, PPM, modulated signal.
22. The system of any one of items 14 to 21, wherein the seed optical power is in the range 1 mW to 200 mW, and wherein the optical amplifier apparatus comprises:
   a first optical amplifier (752) configured to amplify the output laser signal to an intermediate optical power of up to 20 W; and
   at least one further optical amplifier (754) configured to further amplify the output laser signal to an output optical power of up to 2.5 kW.
23. The system of item 22, wherein the seed optical power is in the range 1mW to 10mW, the first optical amplifier (752) is configured to amplify the output laser signal to an intermediate optical power of up to 1 W, and the at least one further optical amplifier (754) is configured to further amplify the output laser signal to an average output optical power of up to 20 W.
24. The system of any one of items 14 to 23, further comprising a delivery optical fibre (902) and output optics (904) at a distal end of the delivery optical fibre, wherein the delivery optical fibre is one of a large mode-area microstructured optical fibre or a hollow core microstructured optical fibre, and wherein the delivery optical fibre is configured to deliver the output laser signal to the output optics.

## Claims

1. An optical signal source (100, 200, 250, 300, 350, 400, 450, 500, 550, 600) comprising:
a seed laser (102) configured to generate a seed laser signal having a first optical spectrum having a first spectral linewidth of up to 10 MHz;
a phase modulator (104) configured to receive the seed laser signal;
radio frequency, RF, drive signal apparatus (106, 402, 404, 406) operative to provide an RF drive signal to the phase modulator in response to a control signal;
a control apparatus (108, 558, 608, 708) configured to provide a control signal to the RF drive signal apparatus, the control signal configured to cause the RF drive signal apparatus to vary the RF drive signal,
wherein the phase modulator is operative in the presence of an RF drive signal to apply phase modulation to the seed laser signal to cause an increase in spectral linewidth thereby forming a broadened laser signal having a second optical spectrum having a second spectral linewidth, broader than the first spectral linewidth, wherein the second spectral linewidth is up to 120GHz; and
a band-stop optical filter (110, 210, 310, 360, 410) located after the phase modulator, the band-stop optical filter having an optical stop band configured to reject wavelengths corresponding to the first optical spectrum, such that when the control signal is on an output laser signal is formed having a third optical spectrum comprising the second optical spectrum with at least the first optical spectrum substantially removed and when the control signal is off there is substantially no output laser signal.

2. The optical signal source of claim 1, wherein the band-stop optical filter comprises one of a fibre Bragg grating, FBG, (210, 252) having a reflection bandwidth configured to reflect wavelengths corresponding to the first optical spectrum or a long-period fibre grating, LPG, (410) having wavelength dependent loss at wavelengths corresponding to the first optical spectrum, such that the third optical spectrum comprises the second optical spectrum with the first optical spectrum substantially removed.

3. The optical signal source of claim 1, wherein the band-stop optical filter comprises:
an FBG (314) having a reflection bandwidth configured to reflect wavelengths corresponding to one of a long wavelengths side of the second optical spectrum excluding wavelengths corresponding to the first optical spectrum or a short wavelengths side of the second optical spectrum excluding wavelengths corresponding to the first optical spectrum; and
an optical circulator (312), arranged to route the broadened laser signal to the FBG and to output light reflected by the FBG.

4. The optical signal source of claim 1, wherein the band-stop optical filter comprises:
an FBG (354) including a central phase shift such that the FBG is configured to transmit wavelengths corresponding to the first optical spectrum and to reflect the other wavelengths of the second optical spectrum; and
an optical circulator (312), arranged to route the broadened laser signal to the FBG and to output light reflected by the FBG.

5. The optical signal source of any one of the preceding claims, wherein a bandwidth of the optical stop band and the first spectral linewidth are less than 20 percent of the second spectral linewidth.

6. The optical signal source of any one of the preceding claims, wherein the seed laser is configured to generate a cw seed laser signal.

7. The optical signal source of claim 6, wherein the control signal is configured to cause the RF drive signal apparatus to modulate an RF signal power of the RF drive signal.

8. The optical signal source of claim 7, wherein the control signal is additionally configured to cause the RF drive signal apparatus to switch the RF drive signal on and off.

9. The optical signal source of claim 6, wherein the RF drive signal apparatus comprises an RF signal source (402), an RF amplifier (404), and an RF switch (406), wherein the RF switch is provided between the RF signal source and the RF amplifier or the RF switch is provided after the RF amplifier, and wherein the control signal is configured to cause the RF amplifier to modulate an RF signal power of the RF drive signal.

10. The optical signal source of claim 9, wherein the control signal is additionally configured to cause the RF switch to switch on and off, to switch the RF drive signal on and off.

11. The optical signal source of any one of claims 1 to 5, wherein the control apparatus is additionally configured to provide a drive signal to the seed laser configured to cause direct modulation of the seed laser to generate a pulsed seed laser signal, and the control signal is configured to cause the RF drive signal apparatus to modulate an RF signal power of the RF drive signal.

12. The optical signal source of any one of the preceding claims, wherein the seed laser (102) is a single frequency laser configured to generate a single frequency seed laser signal having a spectral linewidth of up to 10 MHz.

13. The optical signal source of claim 12, wherein the single frequency seed laser signal has a spectral linewidth of up to 1 MHz, such as up to 20 kHz, such as up to 10 kHz, such as up to 1 kHz, such as up to 500 Hz.

14. An optical ground terminal optical transmission system (700, 750, 800, 900) comprising:
an optical signal source (100, 200, 300, 400, 500, 550, 600, 650) as claimed in any one of claims 1 to 13; and
optical amplifier apparatus (702, 752, 754),
wherein the control signal comprises at least a beacon modulation signal; and
wherein the seed laser signal has a seed optical power and wherein the optical amplifier apparatus is configured to amplify the output laser signal to a transmission optical power, higher than the seed optical power.

15. The system of claim 14, wherein the control signal is a beacon modulation signal.
